# EUROPEAN PATENT APPLICATION

(11) **EP 2 946 657 A1**
(43) Date of publication of application: **25.11.2015**
(21) Application number: 15169290.2
(22) Date of filing: 26.05.2015
(51) Int. Cl.: A01K 5/01

(54) **FEEDING PLATTER FOR PETS**

(30) Priority: 23.05.2014 US 201414286532
(71) Applicant: Gailen, Robert, Chicago, IL 60611 (US)
(72) Inventor: Gailen, Robert, Chicago, IL 60611 (US)
(74) Representative: Freeman, Jacqueline Carol

(57) **Abstract**

A pet feeder (22) comprising a generally planar surface (20), said surface (20) having a plurality of indentations (24) being of a shape sufficient to receive food (F) for a pet (P) and retain the food (F) therein as the pet (P) engages the food (F) with its tongue and presses the food (F) between its tongue and the wall of the indentation (24) and thereafter lifts the food (F) from the indentation to consume it. The feeder (22) is made of high density plastic having antibacterial properties and being resistant to sterilizing fluids. The feeder (22) is made of a high-density thermoplastic material that facilitates the cutting of various foods (F) without dulling cutting implements and may be easily cleaned and sanitized in a dishwasher or by hand.

## Description

### Reference to Prior Application

This application claims priority from U.S. Design Patent Application Serial No. 29/453,283 filed, April 26, 2013.

### Background of the Invention

### 1. Field of the Invention

The present invention relates to a pet feeding device and in particular to a pet feeding environment where food is placed in such a manner as to permit pets to engage in instinctive feeding behavior during their consumption of food.

### 2. Description of the Prior Art

Domesticated dogs and cats are not able to thoroughly experience their natural feeding behavior while consuming food from a bowl or a vessel such as a bowl. Eating from a bowl presents complications such as bloat due to rapid food consumption and swallowing air. Depending on the height of the bowl sides, the pet's vision of its surroundings may be obstructed.

Feeding bowls are generally single cavity concave containers that contain the entire contents of a meal. Consuming food from a bowl or feeding vessel confines dogs and cats to the singular activity of eating a complete serving in its entirety. This activity is perfunctory and does not give the dog or cat the opportunity to become emotionally engaged in its feeding experience.

Feeding apparatuses of the prior art include various designs to deliver food to pets. These devices may challenge the pet's interaction with food; parcel out limited quantities of food; engage the pet in locating food; and slow the speed of consuming food. These feeding apparatuses share the commonality of confining a food serving in a single cavity or trough. They may often lead to a dog or cat becoming frustrated or anxious during the feeding activity. Feeding apparatuses of the prior art include a pan for collecting spilled food for disposal at a later time. Thus, in a device in accordance with U.S. Pat. No. 4,532,891, spilled food cannot be consumed by the pet because the food falls through a lattice and is allowed to remain in a pan below the feeding bowls for an extended period of time.

U.S. Pat. No. 4,532,891 discloses a pet feeder assembly characterized by a substantially rectangular pan, an open lattice member engaged with the sidewalls of the pan, and a pair of feeding bowls engaged with apertures provided through the lattice member. The lattice member has interstices large enough to permit water, kibble and other large size particulate matter to fall into a collection pan.

U.S. Pat. No. 2005/0115508 discloses an elevated pet feeder with removable easily cleaned food and water containers which fit into a table platform structure of a pet-specific size and shape made of natural wood material of a heavy weight with heavy legs to hold the feeder in place while the pet eats and drinks. The table surface comprises indentations, which enable the pet's neck to be positioned adjacent to the food and water containers.

U.S. Pat. No. 4,907,539 discloses a combination pet feeder consisting of a divided food and water bowl centered and anchored on a flat and colorful rubber mat. The mat catches all spillages while the dog feeds. The bowl stays in position at all times.

U.S. Pat. No. 7,040,252 discloses a pet feeding device for holding a commercially available disposable paper plate. The device comprises a tray base with four molded integral hooks. The paper plate is slid in place under three of the four hooks and snapped in place under the fourth hook to secure it in place. The tray base prevents food displaced from the plate by the feeding animal from falling on the floor. The paper plate is disposed of after use. The tray base is made of plastic or similar material that is easily washable by hand or in a dishwasher.

U.S. Pat. No. 2013/0305996 discloses a tray for presenting food to a pet or animal. The tray includes a top side, an underside and a peripheral side extending between the top side and the underside. The topside is a series of interconnected grooves resembling troughs that traverse the tray.

U.S. Pat. No. 7,178,798 discloses a cutting board comprising a top surface and a bottom surface. The top surface is bounded by a raised edge curvlinearly extending into a channel encompassing a planar work surface. At one end, fluid and food in the channel pools into a reservoir having a spillway with a lip extending sconce-like and coplanar with the raised edge forming a spout. The bottom side is notched to serve as a handhold opposing the spout. The work surface recess that serves to decrease mass is ribbed by a lattice of intersecting walls providing a light-weight product while substantially increasing the work surface load capacity.

### Objects of the Invention

The primary objective of the present invention is to give a dog or cat the opportunity to see an entire serving of food and to engage in its instinctive eating behavior while consuming the food. The entire surface environment of the invention is intended to provide an opportunity for the pet to navigate the surface to its liking. The pet can scoop food from an array of indentations and from a groove surrounding the table surface, and eat food resting on the surface or lick the surface until the pet is satisfied or all the food has been consumed.

A second objective is to provide a feeding surface resembling a more natural feeding environment. This allows the pet to explore and experience the challenge of digging and licking with its tongue during an extended feeding period. This feeding method regulates food consumption while inducing increased licking that encourages the release of endorphins that serve to relax and satisfy the pet.

Another advantage of the present invention gives the pet owner the ability to prepare a variety of meals needing to be cut to an appropriate size without the need to transfer the cut food to another feeding container. This leaves the cut food and remaining liquid or gravy on the surface to be consumed by the dog or cat.

A further advantage of the present invention is that a variety of food types may be cut, smeared, poured or placed on the surface of the invention and pushed into the indentations for the enjoyment of the dog or cat.

A still further advantage of the present invention is that the cutting surface will not dull cutting implements during normal use and may be washed by hand or in a dishwasher.

Yet another advantage of the present invention is that the bottom surface may be used as a cutting surface that will not dull cutting implements during normal use.

Another advantage of the present invention is the absence of protrusions or removable devices that can be accessed by a pet and mutilated or ingested.

A further advantage of the present invention is that it may be continuously reused.

Still another advantage of the present invention is that it is made from a non-toxic material that is extremely durable, scratch and bite resistant, recyclable and available in a variety of colors.

### Brief Description of the Drawings

These and other advantages and details of our invention will be described in connection with the accompanying drawings, which are furnished only by way of illustration and not in limitation of the invention. In the drawings:
**FIG. 1** is an isometric view of a small bone shape feeder with a dog looking over it.
**FIG. 2** is an isometric view of a large bone shape feeder with a dog looking over it.
**FIG. 3** is an isometric view of the bottom of a bone shape feeder.
**FIG. 4** is a cutaway isometric view showing feeder having indentations in the surface of the invention.
**FIG. 5** is a cutaway isometric view showing a raised edge that surrounds the invention.
**FIG. 6** is an isometric view showing food being cut on the surface of the invention.
**FIG. 7** is an isometric view showing a dog licking the surface of the invention.
**FIG. 8** is a cutaway isometric view showing a dog's tongue within an indentation of the invention.
**FIG. 9** is a cutaway isometric view showing food on a dog's tongue being lifted out of an indentation.
**FIG. 10** is a top plan view of a fish shaped feeder embodying of the present invention.
**FIG. 11** is a top plan view of a round shaped feeder embodying of the present invention.
**FIG. 12** is a top view of a quadrilateral shaped feeder having rounded corners embodying the present invention.

### Detailed Description and Best Mode for Carrying out the Invention

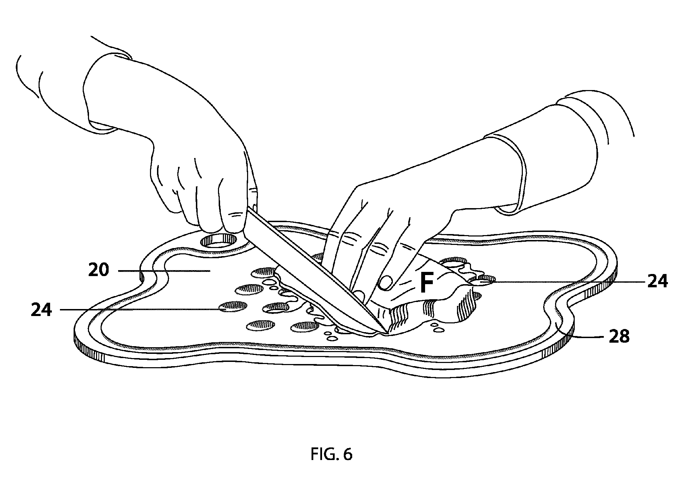

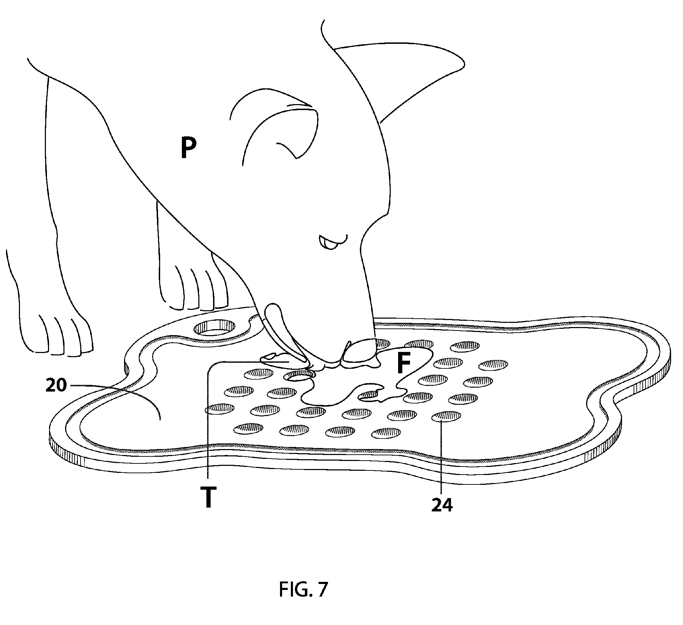

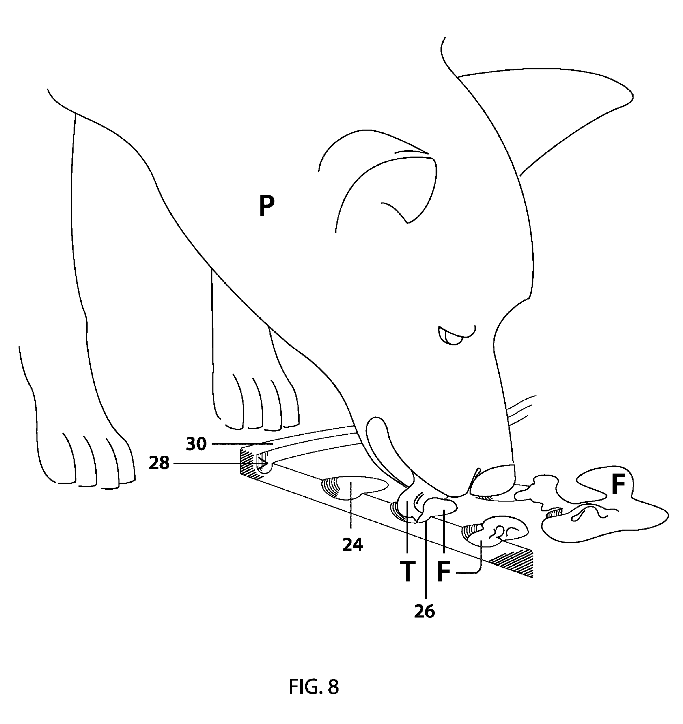

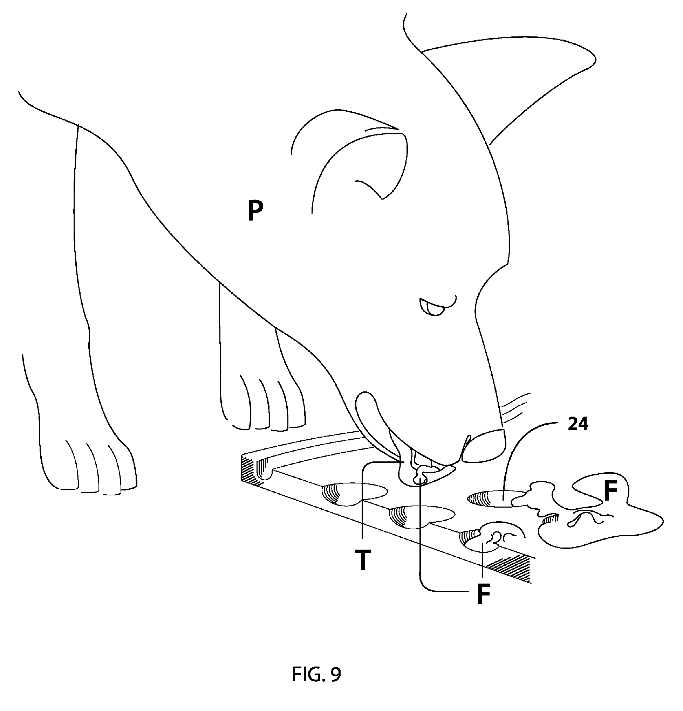

To accomplish the objectives and provide the advantages of the invention described above, we provide a pet feeder **22** here embodied in a legless unitary slab or tablet upon which can be placed food **F** for the pet **P.** To encourage the pet **P** to engage the food in accordance with the pet's natural eating or consumption habits, the upper surface **20** of the feeder **22** is generally planar, but that surface **20** is provided with a plurality of indentations **24.** In accordance with one aspect of the invention and as illustrated sequentially in **figures 6****,** **7****,** **8** and **9****,** these indentations **24** are of a size and shape sufficient to receive food **F** and to retain that food therein as the pet engages the food with its tongue **T.** The pet **P** then presses the food between its tongue **T** and a wall **26** of the indentation, in accordance with its natural eating habits. In further accordance with natural eating habits, the pet **P** then lifts the food **F** on its tongue **T** from the indentation **24** into the pet's mouth to consume the food.

Thus the feeder top surface **20** and the indentations **24** resemble, in some functional ways, the natural feeding environment of the pet's ancestors (and, possibly, the pet itself) so as to encourage the pet to employ its instinctual feeding behavior in the consumption of the food. This arrangement allows for the pet to experience the challenges of digging and licking with its tongue during an extended feeding period. This feeding experience encourages, in turn, the release of endorphins during the food consumption and licking process, and the endorphin release and general experience may serve to relax and satisfy the pet.

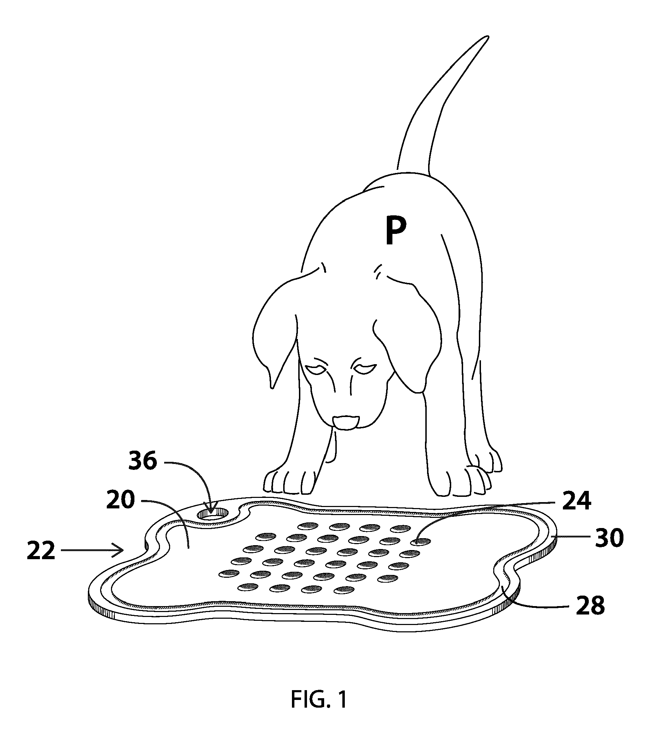

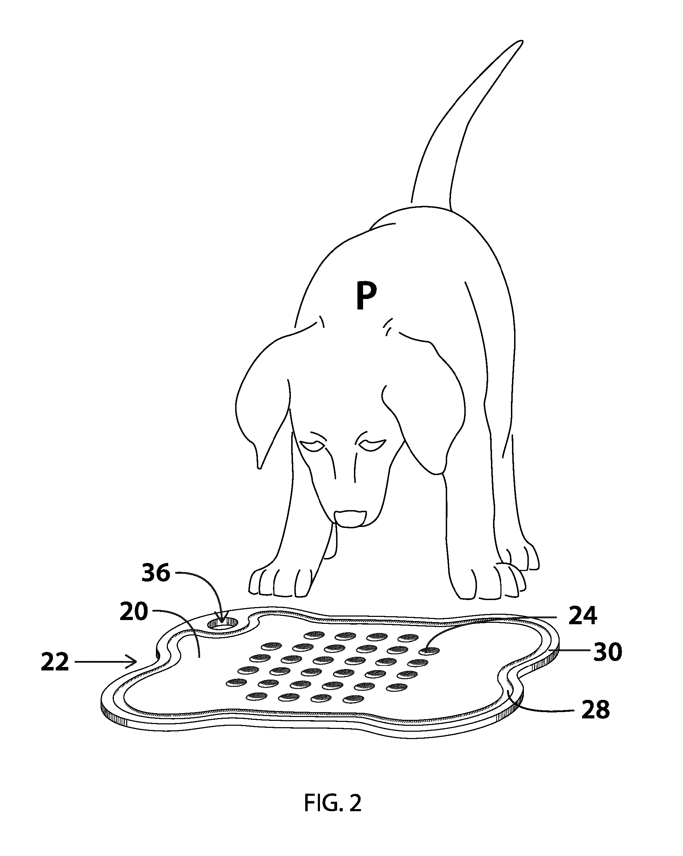

It will be understood that the novel feeder may be manufactured and offered in a variety of sizes and shapes, and the indentations **24** may be provided in a variety of sizes and shapes and array formations. As suggested in **figure 1****,** relatively small and shallow indentations can be provided in feeders designed for use by, for example, kittens, puppies and small dogs and cats. Larger feeders having deeper, wider indentations which are spaced farther apart from one another can be offered for use by mature pets and larger animals as suggested in **figure 2****.**

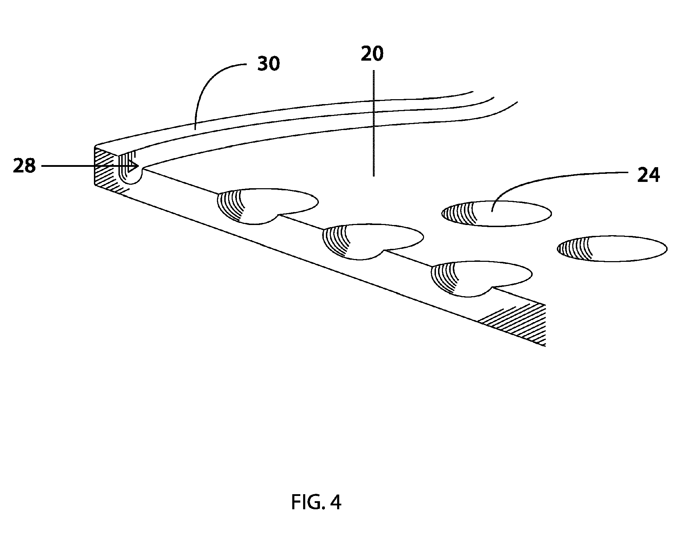

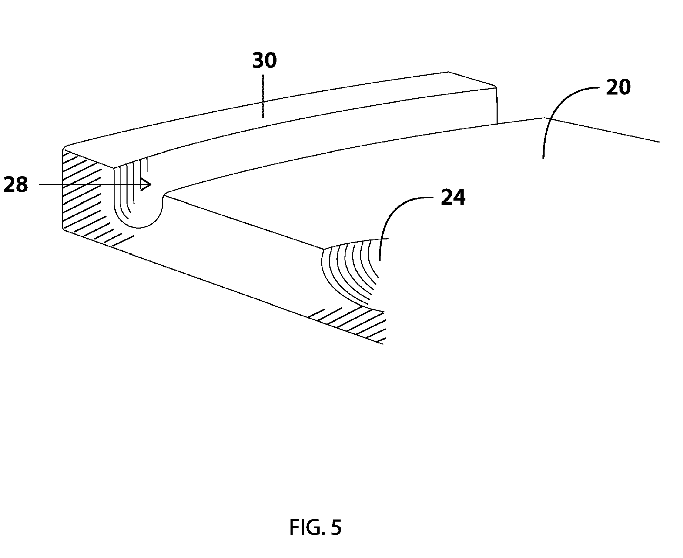

In accordance with another aspect of the invention, the edge of the feeder **22** is here formed or otherwise provided with a trough **28** and a raised edge or rim **30,** as shown in **figures 4** and **5****.** These arrangements or formations are of a height, depth, size and shape to prevent, or at least inhibit, food and liquids from being lost from the feeder and escaping onto a floor or other inconvenient surface. Again, the exact size and shape of the groove **28** or trough and the raised edge or rim **30** are selected to be of maximum effectiveness for the intended pet user and maximum attractiveness to the pet owner or caregiver. Preferably rounded corners and rounded edges are provided to minimize damage to food preparation instruments and discomfort to the pet and pet caregiver.

In carrying out the manufacture of the invention, this feeder tablet or slab can be made by injection molding or other appropriate process from food grade thermoplastic. In a preferred embodiment of the invention, that plastic can be a composite material. More specifically, it can be a high density polyethylene plastic having antibacterial properties, and it can be resistant or impervious to sterilization by heat and/or sterilizing fluids. If desired, the plastic can be selected from a group of materials approved by the US Department Of Agriculture, the National Safety Foundation, and the US Food And Drug Administration. The plastic material can include fiber extracted from trees grown in sustainably managed forests. One such material is offered in association with the trademark THRIVE by the Weyerhaeuser Corporation, 33663 Weyerhaeuser Way South, Federal Way, WA 98001. This material is not harmful to pets, humans or the environment, and it is dishwasher safe. The material is sufficiently dense that the end product feeder will be heavy enough to effectively resist being pushed across the floor or other planar surface by an enthusiastic and hungry pet if an appropriate non-skid underlayment is used between the feeder and the floor.

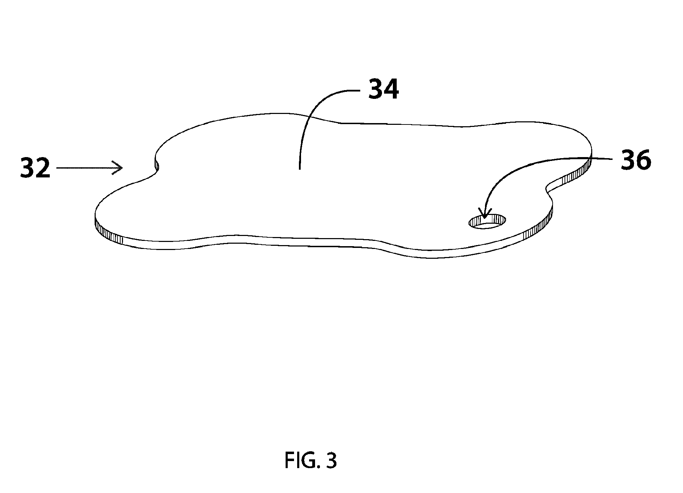

Another aspect of the invention is illustrated in **figure 3****,** which shows the reverse side or bottom **32** of the feeder **22.** The surface **34** is planar, and can be used as a cutting board for preparing food for the pet or any other suitable material. The high density plastic material contemplated here is substantially impervious to cutting or damage by kitchen knives or other common food utensils.

Food can be prepared for the pet directly on the upper or serving surface, as illustrated in **figure 6****.** Juices or small particles resulting from the cutting process on the top surface of the board will collect in the indentations **24** on the top **20** and in the grooves **28** which surround the feeder top surface cutting area.

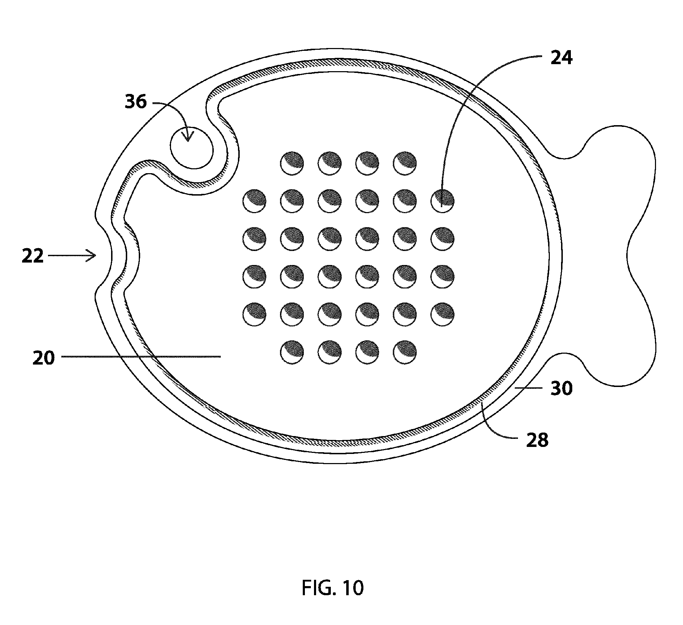

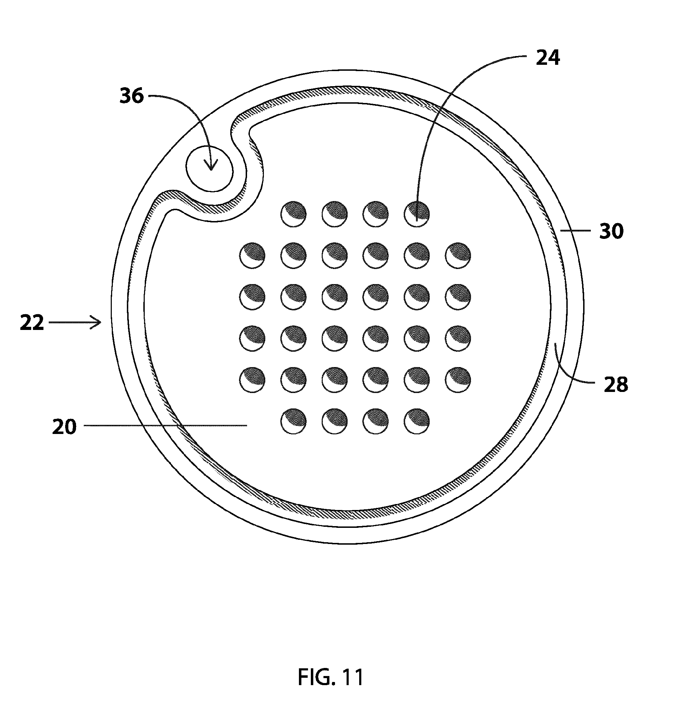

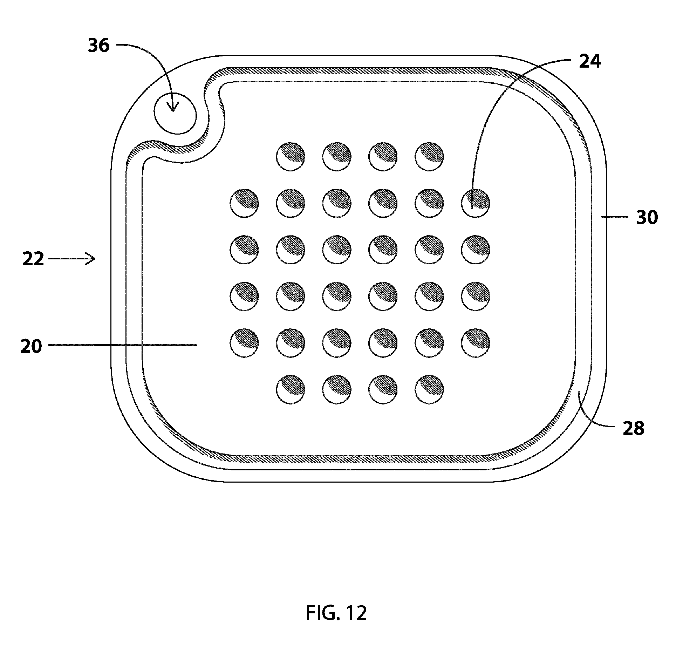

As illustrated in **figures 1** and **10****,** the pet feeder can be sized and shaped to suggest the appearance of an object selected from a group of objects which are familiar and attractive to pet owners. For example, the feeder shown in **figure 1** has a size and shape suggestive of a bone attractive to dogs and dog owners. The feeder shown in **figure 10** has a shape suggestive of a fish attractive to cats and cat caregivers. These and other shapes can be recognized by the pet and the pet owner as belonging specifically to that pet. Other, relatively abstract, shapes such as circular discs of a shape similar to the shape shown in **figure 11****,** and generally rectilinear shapes of the sort shown in **figure 12****,** may also be commercially attractive.

If desired, the feeders may be formed or otherwise made with one or more through holes **36** to permit the feeder to be hung on a convenient hook. If desired, the through hole **36** can be sized and positioned to act as a thumb hole for ease of feeder manipulation.

It will be understood by those skilled in the art that various modifications can be made to the embodiments of the invention described and illustrated here without departing from the spirit and scope of the invention as defined by the appended claims.

## Claims

1. A pet feeder comprising a generally planar surface, said surface having a plurality of indentations being of a shape sufficient to receive food for a pet and retain the food therein as the pet engages the food with its tongue and presses the food between its tongue and the wall of the indentation and thereafter lifts the food from the indentation to consume it.

2. A pet feeder according to claim 1 wherein said surface is provided with an endless raised rim of sufficient height to inhibit the loss of food from the surface.

3. A pet feeder according to claim 1 wherein said surface is provided with an indented groove of sufficient depth to inhibit the loss of food from the surface.

4. A pet feeder according to claim 1 made from injection molded food grade thermoplastic.

5. A pet feeder according to claim 1 made from high density thermoplastic material that can be used as a cutting board.

6. A pet feeder according to claim 1 wherein the appearance of said feeder is similar to the silhouette of an object selected from a group of objects familiar and attractive to pet owners.

7. A pet feeder according to claim 1 wherein said feeder is formed of a material that is not harmful to pets, humans or the environment.

8. A pet feeder according to claim 1 wherein said feeder is formed of a material that is dishwasher safe.

9. A pet feeder according to claim 1 wherein said table is formed of a material that is not harmful to pets, humans or the environment.

10. A pet feeder according to claim 1 wherein said table is formed of a material that is dishwasher safe.

11. A pet feeder according to claim 1 wherein said indentations are of a size and shape generally related to the size and shape of the pet expected to use the feeder.

12. A pet feeder made of high density plastic having antibacterial properties and being resistant to sterializing fluids.

13. A pet feeder according to claim 12 having an upper surface provided with an array of food-receiving receptacles.

14. A pet feeder according to claim 12 having a planar cut-resistant surface.

15. A pet feeder according to claim 12 made of material having the characteristics of THRIVE material.
